# EUROPEAN PATENT SPECIFICATION

(11) **EP 0 598 890 B1**
(45) Date of publication and mention of the grant of the patent: **13.08.1997**
(21) Application number: 93914431.7
(22) Date of filing: 08.06.1993
(51) Int. Cl.: C08F 10/00, C08F 4/654

(54) **TITANIUM MAGNESIUM CATALYST PRECURSORS FOR THE POLYMERIZATION OF OLEFINS**
TITAN UND MAGNESIUM ENTHALTENDER KATALYSTVORLÄUFER ZUR OLEFINPOLYMERISATION
PRECURSEURS DE CATALYSEURS AU TITANE-MAGNESIUM POUR LA POLYMERISATION D'OLEFINES

(30) Priority: 10.06.1992 US 896271
(43) Date of publication of application: 01.06.1994
(73) Proprietor: CHEVRON RESEARCH AND TECHNOLOGY COMPANY,, San Francisco, CA 94120-7141 (US)
(72) Inventor: BEACH, David, L., Kingwood, TX 77345 (US); KRAUSE, Michael, J., Milltown, NJ 08850 (US)
(74) Representative: Nash, David Allan
(86) International application number: US9305457
(87) International publication number: WO9325589

(56) References cited:
- EP-A- 0 009 426
- DE-A- 3 040 044
- FR-A- 2 144 080
- US-A- 4 506 061

## Description

### FIELD OF THE INVENTION

This invention relates to a new titanium magnesium catalyst precursor used to prepare catalysts which are useful for the polymerization of olefins. More particularly, this invention relates to a new method for the preactivation of a titanium catalyst wherein the catalyst precursor is preactivated by adding a preformed alkylmagnesium halide to a solution containing titanium compound(s) and an alkyl halide. As used herein, the term "preactivation" means contacting the titanium with a magnesium compound and one or more alkyl halide(s).

### BACKGROUND OF THE INVENTION

It is known that olefins such as ethylene can be polymerized by means of a solid catalyst which comprises: a compound of a transition metal such as titanium in the trivalent or tetravalent state, and a co-catalyst of the organo-metallic type, most frequently an organo-aluminum compound.

Although these catalytic systems have an attractive degree of activity, when polymerization is concluded they generally result in the formation of polymers containing more than 100 parts per million by weight of transition metal. For most of the uses of such polymers, this makes it virtually essential to remove the catalytic residues by a special treatment.

It is also known that it is possible to very substantially increase the catalytic activity of the aforementioned reduced transition metal compounds by means of a preactivation treatment. This treatment involves contacting the transition metal compound with magnesium and one or more alkyl halide(s). The reduced transition metal compounds which are preactivated by this treatment result in catalysts which make polymers having good physical characteristics and capable of being processed by injection molding or by extrusion. By virtue of the high degree of activity of the preactivated catalysts, removing the catalytic residues contained in the polymers becomes unnecessary.

U.S. Patent No. 4,042,771, issued to Michel Avaro and Pierre Mangia on August 16, 1977, discloses one type of preactivation treatment. In Avaro's treatment, the magnesium used was in the form of powder or turnings because it is said to be preferable to have the magnesium in a high state of purity. In order to facilitate preactivation of the solid transition metal compounds, the magnesium is used in a reactive form which is substantially devoid of impurities due in particular to oxidation of the metal. Avaro et al. state that, in practice, the magnesium in the industry is activated before being introduced into the medium in which preactivation is effected. According to Avaro et al., previous activation of the magnesium can, for example, comprise grinding the metal in an inert atmosphere or in an inert liquid such as an aliphatic solvent. This preliminary operation can also be effected by treating the magnesium with iodine vapor. It is stated to be more convenient, however, to activate the magnesium within the medium in which preactivation is effected.

There are several problems with the procedure disclosed by Avaro et al. For one, the reaction depends on the magnesium source and its state of purity. Therefore, reproducability of experimental results can be a problem. Also, when the procedure involves the added step of grinding the magnesium, additional equipment is required. Furthermore, when iodine is used to activate the magnesium, unreacted magnesium and iodine may contaminate any subsequent reactions. Lastly, catalysts prepared by Avaro et al.'s procedure produce unacceptable amounts of fine polyolefin particles, i.e., particles of polyolefin having a diameter of less than 180 microns. Consequently, an expensive elutriation of the catalyst is required to remove fine catalyst particles before polymerization can occur in a commercial reaction.

Use of a preformed alkylmagnesium halide as a magnesium source in the preactivation treatment of olefin polymerization catalysts is also known in the art and solves some of the aforementioned problems. U.S. Patent No. 4,355,143, issued to Lassalle on October 19, 1982, discloses the use of organomagnesium halide in the preactivation treatment of catalysts used for the polymerization of olefins.

Lassalle discloses that the catalyst may be preactivated by reaction of one or more compounds of tetravalent titanium, and an organomagnesium halide compound having the formula MgXR or the formula MgR₂ wherein X is a chlorine or bromine atom, and R is an alkyl radical which may contain from 2 to 8 carbon atoms.

Example C of Lassalle's patent discloses a procedure for preparing the catalyst. In that example, a preformed alkylmagnesium halide is first prepared by reacting powdered magnesium in a flask with an alkyl halide in heptane with an iodine crystal. A solution of titanium compounds is added to the resulting suspension of alkylmagnesium halide over a period of 2 hours, and the resulting product forms by precipitation.

FR-A-2 144 080 discloses in example 4 a catalyst precursor prepared by gradually adding a preformed n-butylmagnesium chloride suspension to a liquid solution maintained at 75 °C comprising heptane as a solvent, titanium tetrachloride, and butylchloride. The catalyst precursur is used together with triethyl aluminium to produce a catalyst for olefin polymerization.

It is advantageous to make a catalyst that minimizes the amount of fine particles of polyolefin that remain after polymerization. It is also advantageous to create a catalyst which can produce polyolefin having a higher melt index at lower concentrations of hydrogen. The present invention provides these advantages.

### SUMMARY OF THE INVENTION

In accordance with the present invention, there is provided a catalyst precursor, useful to make catalysts useful in the polymerization of olefins, comprising magnesium and titanium, wherein the catalyst precursor is prepared by adding a preformed alkylmagnesium halide to a liquid solution comprising a solvent having dissolved therein (a) a titanium alkoxide or both a titanium alkoxide and a titanium halide; and (b) an alkyl halide.

In accordance with the present invention as described herein the alkylmagnesium halide is defined by the formula R¹MgZ wherein R¹ is an alkyl radical and Z is a halide and the alkyl halide is defined by the formula R²Z wherein R² is an alkyl radical and Z is a halide,
and the addition of the preformed alkylmagnesium halide to the liquid solution is controlled over a period of time of at least one hour in a manner to allow small concentrations of the preformed alkylmagnesium halide to react with excess titanium at the beginning of the reaction.

Also provided in accordance with the present invention is a method for the preparation of a catalyst precursor, useful to make catalysts useful in the polymerization of olefins, comprising adding a preformed alkylmagnesium halide to a liquid solution comprising a solvent having dissolved therein:
(a) a titanium alkoxide or both a titanium alkoxide and a titanium halide; and
(b) an alkyl halide.

The present invention also provides a catalyst precursor, useful to make catalysts useful in the polymerization of olefins, comprising the product obtained by reacting a preformed alkylmagnesium halide with a liquid solution comprising a solvent having dissolved therein (a) a titanium alkoxide or both a titanium alkoxide and a titanium halide; and (b) an alkyl halide, said catalyst precursor being comprised of hollow particles.

Also provided in accordance with the present invention is a polymerization catalyst, useful for the polymerization of olefins, prepared by a process comprising adding an organoaluminum compound, preferably tri-n-octyl-aluminum or triethylaluminum, to the product obtained by adding a preformed alkylmagnesium halide to a liquid solution comprising a solvent having dissolved therein:
(a) a titanium alkoxide or both a titanium alkoxide and a titanium halide; and
(b) an alkyl halide.

Also provided in accordance with the present invention is an improved process for the polymerization of olefins in the presence of a polymerization catalyst, wherein the improvement comprises employing a catalyst made from a catalyst precursor comprising the product obtained by adding a preformed alkylmagnesium halide to a liquid solution comprising a solvent having dissolved therein:
(a) a titanium alkoxide or both a titanium alkoxide and a titanium halide; and
(b) an alkyl halide.

Also provided in accordance with the present invention is an improved process for the polymerization of olefins in the presence of a polymerization catalyst, wherein the improvement comprises employing a catalyst made from a catalyst precursor comprising the product obtained by reacting a preformed alkylmagnesium halide and a liquid solution comprising a solvent having dissolved therein:
(a) a titanium alkoxide or both a titanium alkoxide and a titanium halide; and
(b) an alkyl halide;
wherein said catalyst precursor is comprised of hollow particles.

Also provided in accordance with the present invention is a prepolymer, useful for the polymerization of olefins, obtained by the process comprising:
(1) reacting a catalyst precursor formed by adding a preformed alkylmagnesium halide to a liquid solution comprising a solvent having dissolved therein:
   (a) a titanium alkoxide or both a titanium alkoxide and a titanium halide; and
   (b) an alkyl halide; with
(2) an activator, such as triethylaluminum or tri-n-octylaluminum; and
(3) contacting the product of step (2) with a sufficient amount of olefin (preferably ethylene), under olefin polymerization conditions, such that the product obtained has a melt index in the range of 1 to 5 g/10 min.

In one embodiment, the present invention involves a process for the polymerization of olefins, the process comprising:
(a) making a preformed alkylmagnesium halide in a solvent;
(b) making a liquid solution comprising a solvent having dissolved therein titanium tetrahalide, titanium tetra-alkoxide or both and an alkyl halide;
(c) adding the product of step (a) to the liquid solution of step (b);
(d) adding trialkylaluminum to the product obtained from step (c);
(e) reacting the product of step (d) with a sufficient amount of olefin, under olefin polymerization conditions, such that the product formed has a melt index in the range of 1 to 5 g/10 min;
(f) reacting the product of step (e) with sufficient olefin, under olefin polymerization conditions, to produce polyolefin resin.

Among other factors, the present invention is based on the discovery that a better catalyst is made by reversing the traditional order of addition of reactants in a titanium magnesium catalyst precursor synthesis. More particularly, the present invention is based on the discovery that the catalyst precursor made by adding a preformed alkylmagnesium halide to a solution comprising a solvent having dissolved therein:
(a) a titanium alkoxide or both a titanium alkoxide and a titanium halide; and
(b) an alkyl halide
produces olefin polymerization catalysts which are surprisingly more advantageous than catalysts obtained from catalyst precursors made by adding the liquid solution of titanium compounds to the preformed alkylmagnesium halide. Some of the advantages of the present invention over the prior art are: the surprisingly high hydrogen response of the catalyst, production of fewer fine particles at the synthesis stage using raw catalyst and prepolymers, and the catalysts' unique morphology, which is different from prior catalysts in that the present invention's catalysts are comprised of hollow particles.

### BRIEF DESCRIPTION OF THE DRAWINGS

Figure 1 is a graph depicting melt index of polymers made in accordance with the present invention as a function of hydrogen pressure.

Figure 2 is a bar graph showing the effect of catalyst type on the production of polyethylene fine particles.

### DETAILED DESCRIPTION OF THE INVENTION

For the sake of brevity, the terms "normal addition" and "reverse addition" will be used herein to describe the prior art method and the method of the present invention for making titanium magnesium olefin polymerization catalyst precursors. In the prior art method, the "normal addition", a solution of titanium compound(s) and alkyl halide is added to alkylmagnesium halide. In the method of the present invention, the "reverse addition", preformed alkylmagnesium halide is added to a solution of titanium compound(s) and alkyl halide.

Also, as used herein, the term "catalyst precursor" refers to the titanium magnesium product obtained by reacting a titanium compound(s), alkylmagnesium halide and alkyl halide. The catalyst precursor is not an olefin polymerization catalyst, but can be activated to become one.

In one aspect, the present invention is a process for the polymerization of olefins, preferably alpha-olefins, more preferably ethylene. The process includes the polymerization of one or more olefins having the formula CHA=CHA' wherein A and A' are each independently hydrogen or an alkyl radical containing from 1 to 8 carbon atoms. Preferred olefins are alpha-olefins wherein at least one of A or A' is hydrogen.

The olefins are contacted with a polymerization catalyst. The polymerization catalyst comprises a catalyst precursor that has been activated by an activator molecule. The catalyst precursor of the present invention comprises the product obtained by:
(a) adding a preformed alkylmagnesium halide to;
(b) a liquid solution comprising a solvent having dissolved therein:
   (1) a titanium alkoxide or both a titanium alkoxide and a titanium halide ; and
   (2) an alkyl halide.

Once formed, the catalyst precursor is activated with an activator compound. Typically, the activator is an organometallic compound or compounds of a metal of Groups II or III of the Periodic Table of elements. Preferably, the activator is an organoaluminum compound, more preferably an alkylaluminum compound. Examples of activators include, but are not limited to, trialkylaluminum compounds such as triethylaluminum, tri-n-octylaluminum and the like. The activator compound may be used in neat form, or it may be supported on a carrier. If a carrier is employed, it may be an inert, organic or inorganic carrier.

The catalyst precursor may be activated prior to introduction into the polymerization reactor, or the catalyst precursor and activator compound may be added to the polymerization reactor separately.

The olefin polymerization catalyst is contacted with an olefin, under polymerization conditions, to produce a prepolymer. A sufficient amount of olefin is used such that the prepolymer obtained has a melt index in the range of 1 to 5 g/10min. (As used herein, the term "melt index" refers to the unit of measure described in ASTM Procedure No. D-1238. The prepolymer is then used as a catalyst for the polymerization of the olefin. Polymerization is accomplished by adding more olefin to the prepolymer under polymerization conditions.

### I. THE CATALYST PRECURSOR

The catalyst precursors of the present invention are prepared by adding a preformed alkylmagnesium halide to a liquid solution containing titanium compound(s) and an alkyl halide. The alkylmagnesium halide is defined by the formula R'MgZ wherein R¹ is an alkyl radical, preferably C₂ to C₈ alkyl, more preferably butyl, and Z is a halide, preferably chloride or bromide. The alkylmagnesium halide may be added to the liquid solution in solid powdered form or as a solid suspended in an organic liquid, preferably heptane.

The preformed alkylmagnesium halide is slowly added to a solution comprising a solvent having dissolved therein:
(a) a titanium alkoxide or both a titanium alkoxide and a titanium halide; and
(b) an alkyl halide.

The titanium compounds may contain trivalent or tetravalent titanium, having the formula TiZₙ or Ti(OR')ₘ, wherein n and m each is 3 or 4, preferably 4, and Z and R' are as defined above. The titanium halide is preferably titanium tetrachloride and the titanium alkoxide is preferably titanium tetraisopropoxide. More preferably, a mixture of titanium halide and titanium alkoxide in a mole ratio of about 1:1 is used. The mole ratio of Mg to Ti should be in the range of 3:1 to 6:1, preferably 4:1 to 4.5:1.

The alkyl halide is defined by the formula R²Z wherein R² is an alkyl radical, preferably C₂ to C₈ alkyl, more preferably butyl or propyl, and Z is as defined above.

The titanium halide, titanium alkoxide or both is dissolved in an appropriate amount of solvent together with an alkyl halide such that the molar ratios are:
(a) titanium compound to alkyl halide is 0.01:1 to 0.20:1, preferably 0.05:1 to 0.10:1; and
(b) magnesium to alkyl halide is 1:1, preferably 0.8:1 to 1:1.

The amount of solvent to titanium solution should be a volume ratio of about 20-50:1, preferably about 30-35:1. The solvent may be any liquid which dissolves the titanium compound(s) and alkyl halide, and does not interfere with the reaction which produces the catalyst precursor. The solvent will typically be an organic solvent, preferably a hydrocarbon solvent. Examples of suitable solvents include, but are not limited to, C₅ to C₁₀ hydrocarbons. Hexane and heptane are preferred solvents.

The catalyst precursors of this invention may be produced by reaction at a temperature of from 60° to 90°C, preferably from 70° to 80°C. The liquid solution containing the titanium compound(s) and alkyl halide is heated to about 70°C. A preformed alkylmagnesium halide compound is then added to the liquid solution by a controlled addition, i.e., the alkylmagnesium halide is added to the liquid solution slowly over time. Once all of the alkylmagnesium halide has been added to the liquid solution, the resulting mixture is cooled to room temperature and filtered to recover the catalyst precursor in the form of a powder.

It is critical to the present invention that the preformed alkylmagnesium halide be slowly added to the solution of titanium compound(s) and alkyl halide by a controlled addition over a relatively long period of time. While the period of time over which the alkylmagnesium halide is added to the liquid solution will depend on such factors as the size of the reaction mixture, typically that period of time will be 1 to 5 hours, preferably 2 to 4 hours. This manner (and order) of addition is necessary to allow small concentrations of preformed alkylmagnesium halide to react with excess titanium in the beginning of the reaction.

The catalyst precursors synthesized by the reverse addition method of this invention contain particles having a unique morphology, i.e., the catalyst precursor contains hollow particles. These hollow particles are different from the solid, compact particles obtained by the normal addition process. SEM (scanning electron microscopy) pictures of catalysts made by the reverse addition method of this invention and catalysts made by the normal addition method demonstrated this difference. (The equipment used for the SEM was a GEOL JSM-820 Instrument equipped with a Tracor Northern 5500 Energy dispersive X-ray detector.)

Prior to this invention, titanium magnesium catalyst products and prepolymer products made using them have contained a significant amount of fine particles. Fine particles are particles of less than 180 microns in diameter. Particle sizes may be determined by using a Malvern 2600 Particle Size Analyzer or by standard sieving techniques. Fine particles are especially disadvantageous in gas phase olefin polymerization reactions. The fine particles are too light for gas phase polymerization, and easily blow out the top of the reactor bed and into areas of the reactor where polymerization is not supposed to occur. To avoid this problem, the fine particles must be removed prior to polymerization. This is typically done via an expensive elutriation procedure, like the one described in U.S. Patent No. 4,931,193. This procedure involves first having to prepare a homogeneous suspension of the particles in an elutriation liquid, then elutriating the catalyst by filtering the suspension through one or two elutriation columns.

Because the present invention provides catalysts and prepolymers with fewer fine particles, the aforementioned elutriation procedure can be avoided. This saves both time and money , since the additional step of elutriation is expensive and time consuming.

Table I below illustrates the above mentioned advantages.

**Table I**

| | % Fines Raw Catalyst | % Fines Prepolymer | Melt Index of polyethylene product [H2]=(150 psig) 1.14x10⁶Pa | Morphology of Catalyst |
|---|---|---|---|---|
| COMPARATIVE EXAMPLE A | 17.5 | 2 * | 4.9 | Solid & Compact |
| COMPARATIVE EXAMPLE B | 3 | 8 | 4.8 | Solid & Compact |
| EXAMPLE 1 | 4 | 2.3 | 12 | Hollow |

| | | | | |
|---|---|---|---|---|
| * catalyst was elutriated in prior step. | | | | |

### II. OLEFIN POLYMERIZATION CATALYST

The catalyst precursor becomes the polymerization catalyst upon activation. The catalyst precursor is activated by contacting it with an activator compound, as discussed above. Preferred activators are trialkylaluminum compounds, especially triethylaluminum, tributylaluminum and tri-n-octylaluminum. The aluminum to titanium mole ratio is about 0.50:1 to 2.0:1, preferably 0.8:1 to 1.2:1. The catalyst precursor is activated by the activator compound by methods conventional in the art.

### III. PREPOLYMERIZATION AND POLYMERIZATION

Prepolymerization and polymerization are generally carried out under a pressure of less than about 4.8x10⁵ Pa (70 psi) and at a temperature from 40° to 150°C. This operation may be performed by introducing the monomer(s) comprising, e.g., ethylene (and possibly other olefins), into a liquid diluent such as a saturated aliphatic hydrocarbon or, in the absence of diluent, by direct contact between the monomer(s) in the gaseous condition and the constituents of the catalyst system. Prepolymerization and polymerization are carried out in the presence of a chain growth limiter, generally comprising hydrogen, whose proportion by volume with respect to the monomer(s) introduced into the polymerization medium is from 1 to 80%, so as to produce a polymer having the desired melt index.

The catalyst may be introduced into the polymerization reactor directly or in the form of a prepolymer produced by preliminary polymerization of one or more olefins within an inert liquid such as an aliphatic hydrocarbon and in the presence of a catalyst of the present invention. Typically, the prepolymer contains about 1000 parts by weight of olefin per part by weight of titanium. It may or may not be filtered prior to polymerization. The prepolymer has a melt index in the range of 1 to 5 g/10 min.

Having described the basic concepts of the invention, reference is now made to the following Examples which are given by way of illustration, and not of limitation, of the practice of the present invention in the preparation of the catalyst precursor and catalyst, and the use of the catalyst in the polymerization of olefins. The first two Examples are given for comparison to the subject invention.

### COMPARATIVE EXAMPLE A

### Preparing Catalyst Precursor Using Magnesium Powder

The procedure followed, for the preparation of the catalyst and polymerization of the olefin, was substantially the same procedure as described in EXAMPLE A of U.S. Patent No. 4,355,143 issued to Lassalle, except that titanium tetraisopropoxide was used in equal amounts with titanium tetrachloride.

### COMPARATIVE EXAMPLE B

### Preparing Normal Addition Catalyst Precursor

The procedure followed, for the preparation of the catalyst, was substantially the same procedure as that described in EXAMPLE C of U.S. Patent No. 4,355,143, except that titanium tetraisopropoxide was used in equal amounts with titanium tetrachloride.

### EXAMPLE 1

### Preparing Reverse Addition Catalyst Precursor

A 500mL three neck flask topped with a reflux condenser, powder addition funnel, and rubber septum was attached to a Schlenk line. This apparatus was charged with 200mL heptane, 3.4mL (12mmoles) titanium tetraisopropoxide, 1.8mL (16mmoles) titanium tetrachloride, 21mL (200mmoles) butylchloride, and a Teflon stir bar under argon. The mixture was heated to 85°C and 15.7g (134mmoles) butylmagnesium chloride was evenly added to the mixture via the powder addition funnel over 1.5 hrs. The resulting brown slurry was heated an additional 0.5 hr. at 85°C. The mixture was cooled to room temperature and Schlenk filtered to give 15.6g of a tan-brown, free-flowing powder.

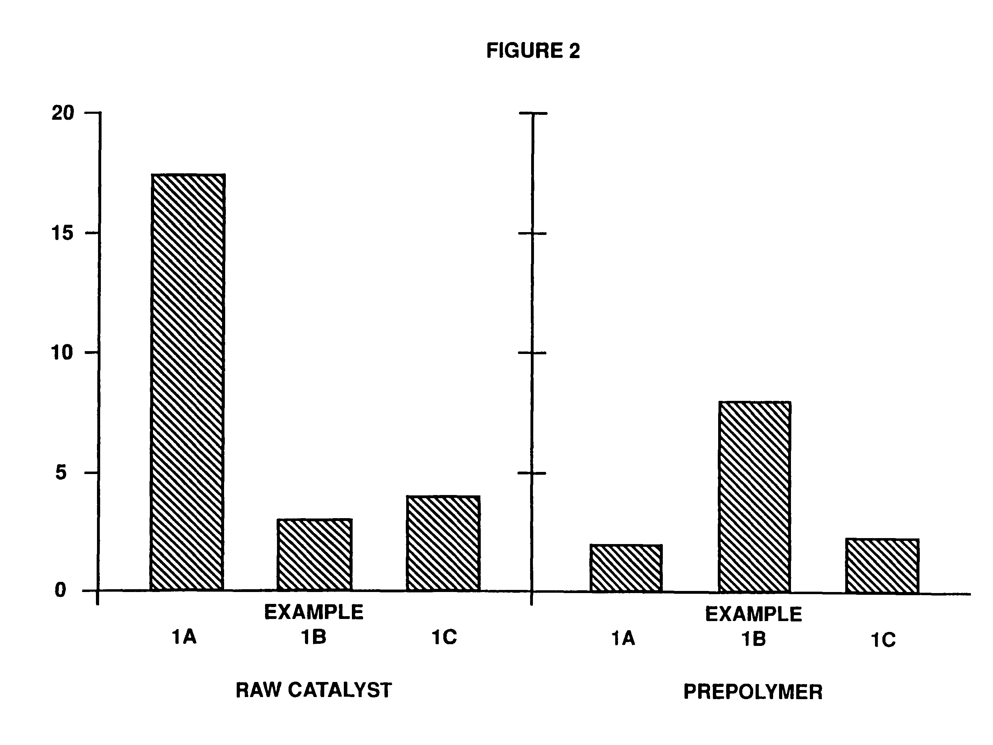

Figure 2 is a bar graph depiction of the percentage of fine particles of polyethylene produced using catalysts made from the magnesium powder catalyst precursor of Comparative Example A, the normal addition catalyst precursor of Comparative Example B, and the reverse addition catalyst precursor of Example 1 wherein the catalysts used were in raw form and in prepolymer form. As used herein, a catalyst used in raw form is one which does not go through a prepolymerization stage.

The graph shows that normal addition catalyst and reverse addition catalyst produce about the same percentage of fine particles in the raw form. However, when using the catalysts in prepolymer form, the reverse addition catalyst produces significantly less fine particles. The graph also shows that powdered magnesium catalysts have the lowest production of fine particles. However, prior to forming the prepolymer, Comparative Example A catalyst was elutriated of its contaminating particles. The elutriation procedure is very timely and expensive.

### EXAMPLE 2

### General Laboratory Procedure for Prepolymerization

An 810 Ml Fisher-Porter bottle is charged with 350 mg of the polymerization catalyst precursor, 50mL heptane, alkylaluminum compound, and a Teflon stir bar. The bottle is connected to an ethylene cylinder and the assembly evacuated. Hydrogen is added as required. The bottle is pressurized as required with ethylene and heated to 80°C. As ethylene is consumed, the pressure falls, and the bottle is repressurized to original pressure after the gauge pressure has fallen 6.9x10⁴ Pa (10 psig). A total of 2.1x10⁶ Pa (300 psi) of ethylene is added in this way. The catalyst gradually turns white-grey during the course of this one to two hour process. The pressure is vented and the solid product dries in vacuo to leave prepolymer as an off-white product.

### EXAMPLE 3

### General Polymerization Procedure

A two-liter autoclave equipped with an anchor-helix stirrer is purged of any oxygen or moisture by evacuation at 80°C followed by several pressure/evacuate cycles with argon. The vessel is charged with a slurry of catalyst precursor, alkylaluminum compound, and 10-20 Ml heptane. Argon and hydrogen are added to bring the pressure to 2.5x10⁶ Pa (350 psig). Ethylene is added to bring the total pressure to 3.9x10⁶ Pa (550 psig). Temperature and stirring rate are maintained and ethylene is metered from a reservoir to determine a kinetic profile of the catalyst. After the appropriate time, the gasses are vented and the reactor cooled to leave polyethylene as a white powder.

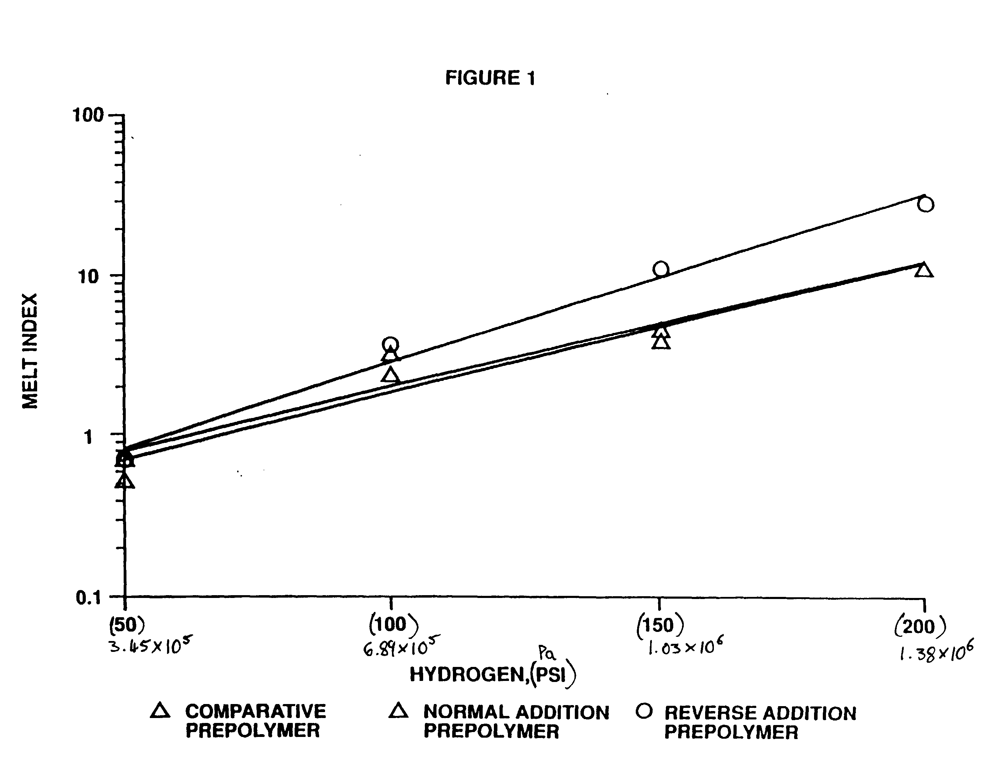

Figure 1 shows the hydrogen response for the catalyst of this invention and comparative catalysts. As can be seen, the catalyst of the present invention gives higher melt index polymers at any given hydrogen concentration. For example, at 1.03x10⁶ Pa (150 psi), the melt index is about 10 when the catalyst of this invention is used, while the melt index is only about 4 for the comparative example. Similarly, at 1.38x10⁶ Pa (200 psi) of hydrogen, the melt index is about 35 when the catalyst of this invention is used, compared to about 12 for the comparative catalyst.

The catalyst of this invention has a surprisingly high hydrogen response, that is, relatively small amounts of hydrogen can be used to alter the polymer molecular weight. This high hydrogen response is advantageous, as it is often desirable to adjust polymer molecular weight during a polymerization run depending on the melt index of the polyolefin product desired and its planned applications or uses.

The high hydrogen response of the catalyst of this invention also means that less hydrogen is used. As it is difficult to remove catalyst poisons from hydrogen, less hydrogen means fewer introduced catalyst poisons. Also, there are operating pressure limits on most ethylene polymerization vessels; these limit the amount of hydrogen that can be added. Moreover, added hydrogen generally displaces ethylene in the polymerization vessel and, thus, decreases the ethylene concentration in the vessel. This can impact the reaction kinetics.

## Claims

1. A catalyst precursor, useful to make catalysts useful in the polymerization of olefins, comprising magnesium and titanium,
wherein the catalyst precursor is prepared by adding a preformed alkylmagnesium halide to a liquid solution comprising a solvent having dissolved therein (a) a titanium alkoxide or both a titanium alkoxide and a titanium halide; and (b) an alkyl halide,
and wherein the alkylmagnesium halide is defined by the formula R¹MgZ wherein R¹ is an alkyl radical and Z is a halide and the alkyl halide is defined by the formula R²Z wherein R² is an alkyl radical and Z is a halide,
and wherein the addition of the preformed alkylmagnesium halide to the liquid solution is controlled over a period of time of at least one hour in a manner to allow small concentrations of the preformed alkylmagnesium halide to react with excess titanium at the beginning of the reaction.

2. The catalyst precursor of claim 1 wherein the titanium halide has the general formula TiZₙ where Z is halide and n is 3 or 4, and the titanium alkoxide has the general formula Ti(OR¹)ₘ where R¹ is an alkyl radical and m is 3 or 4.

3. The catalyst precursor of claim 1 wherein (a) comprises titanium tetraisopropoxide or both titanium tetraisopropoxide and titanium tetrachloride.

4. The catalyst precursor of claim 1 wherein (a) comprises both titanium tetrachloride and titanium tetraisopropoxide.

5. The catalyst precursor of claim 1 wherein the alkyl halide is butyl chloride.

6. The catalyst precursor of claim 1 wherein (a) comprises both titanium tetrachloride and titanium tetraisopropoxide and (b) is butyl chloride.

7. The catalyst precursor of claim 1 which comprises hollow particles.

8. The catalyst precursor of claim 1 wherein the alkylmagnesium halide is added to the liquid solution over a period of 1 to 5 hours.

9. A method for the preparation of a catalyst precursor, useful to make catalysts useful in the polymerization of olefins, said method comprising adding a preformed alkylmagnesium halide to a liquid solution comprising a solvent having dissolved therein (a) titanium alkoxide or both a titanium alkoxide and a titanium halide; and (b) an alkyl halide,
wherein the alkylmagnesium halide is defined by the formula R¹MgZ wherein R¹ is an alkyl radical and Z is a halide and the alkyl halide is defined by the formula R²Z wherein R² is an alkyl radical and Z is a halide,
and wherein the addition of the preformed alkylmagnesium halide to the liquid solution is controlled over a period of time of at least one hour in a manner to allow small concentrations of the preformed alkylmagnesium halide to react with excess titanium at the beginning of the reaction.

10. The method of claim 9 wherein the titanium halide has the general formula TiZₙ where Z is halide and n is 3 or 4, and the titanium alkoxide has the general formula Ti(OR¹)ₘ where R¹ is an alkyl radical and m is 3 or 4.

11. The method of claim 9 wherein (a) comprises titanium tetraisopropoxide or both titanium tetraisopropoxide and titanium tetrachloride.

12. The method of claim 9 wherein (a) comprises both titanium tetrachloride and titanium tetraisopropoxide.

13. The method of claim 9 wherein the alkyl halide is butyl chloride.

14. The method of claim 9 wherein (a) comprises both titanium tetrachloride and titanium tetraisopropoxide and (b) is butyl chloride.

15. A polymerization catalyst, useful for the polymerization of olefins, prepared by a process comprising adding an organoaluminum compound to the catalyst precursor of any one of claims 1 to 8.

16. The catalyst of claim 15 wherein the titanium halide has the general formula TiZₙ where Z is halide and n is 3 or 4, and the titanium alkoxide has the general formula Ti(OR¹)ₘ where R¹ is an alkyl radical and m is 3 or 4.

17. The catalyst of claim 15 wherein (a) comprises titanium tetraisopropoxide or both titanium tetraisopropoxide and titanium tetrachloride.

18. The catalyst of claim 15 wherein (a) comprises both titanium tetrachloride and titanium tetraisopropoxide.

19. The catalyst of claim 15 wherein the alkyl halide is butyl chloride.

20. The catalyst of claim 15 wherein (a) comprises both titanium tetrachloride and titanium tetraisopropoxide and (b) is butyl chloride.

21. The catalyst of claim 15 wherein the organoaluminum compound is a trialkylaluminum compound.

22. The catalyst of claim 21 wherein the trialkylaluminum compound is triethylaluminum or tri-n-octyl aluminum.

23. A prepolymer, useful for the polymerization of olefins, obtained by the process comprising:
(1) reacting the catalyst precursor of any one of claims 1 to 8 with an activator which is an organometallic compound or compounds of a Group II or III metal; and
(2) contacting the product of step (1) with a sufficient amount of olefin, under olefin polymerization conditions, such that the prepolymer obtained has a melt index in the range of 1 to 5g/l0min.

24. A process for the polymerization of olefins in the presence of a polymerization catalyst, the process comprising employing a catalyst made from a catalyst precursor comprising the product obtained by adding a preformed alkylmagnesium halide to a liquid solution comprising a solvent having dissolved therein (a) a titanium alkoxide or both a titanium alkoxide and a titanium halide; and (b) an alkyl halide,
wherein the alkylmagnesium halide is defined by the formula R¹MgZ wherein R¹ is an alkyl radical and Z is a halide and the alkyl halide is defined by the formula R²Z wherein R² is an alkyl radical and Z is a halide,
and wherein the addition of the preformed alkylmagnesium halide to the liquid solution is controlled over a period of time of at least one hour in a manner to allow small concentrations of the preformed alkylmagnesium halide to react with excess titanium at the beginning of the reaction.

25. The process of claim 24 wherein the titanium halide has the general formula TiZₙ where Z is halide and n is 3 or 4, and the titanium alkoxide has the general formula Ti(OR¹)ₘ where R¹ is an alkyl radical and m is 3 or 4.

26. The process of claim 24 wherein (a) comprises titanium tetraisopropoxide or both titanium tetraisopropoxide and titanium tetrachloride.

27. The process of claim 24 wherein (a) comprises both titanium tetrachloride and titanium tetraisopropoxide.

28. The process of claim 24 wherein the alkyl halide is butyl chloride.

29. The process of claim 24 wherein (a) comprises both titanium tetrachloride and titanium tetraisopropoxide and (b) is butyl chloride.

30. The process of claim 24, wherein the catalyst precursor comprises hollow particles.

31. A process for the polymerization of olefins comprising:
(1) making a preformed alkylmagnesium halide in a solvent;
(2) making a liquid solution comprising a solvent having dissolved therein titanium alkoxide or both a titanium alkoxide and a titanium halide, and an alkyl halide;
(3) adding the product of step (1) to the liquid solution of step (2);
(4) adding trialkylaluminum to the product of step (3);
(5) reacting the product of step (4) with a sufficient amount of olefin, under olefin polymerization conditions, such that the product formed has a melt index in the range of 1 to 5 g/l0min; and
(6) reacting the product of step (5) with sufficient olefin, under olefin polymerization conditions, to produce polyolefin resin,
wherein the alkylmagnesium halide is defined by the formula R¹MgZ wherein R¹ is an alkyl radical and Z is a halide and the alkyl halide is defined by the formula R²Z wherein R² is an alkyl radical and Z is a halide,
and wherein the addition of the preformed alkylmagnesium halide to the liquid solution is controlled over a period of time of at least one hour in a manner to allow small concentrations of the preformed alkylmagnesium halide to react with excess titanium at the beginning of the reaction.

32. The process of claim 31 wherein the titanium halide has the general formula TiZₙ where Z is halide and n is 3 or 4, and the titanium alkoxide has the general formula Ti(OR¹)ₘ where R¹ is an alkyl radical and m is 3 or 4.

33. The process of claim 31 wherein (a) comprises titanium tetraisopropoxide or both titanium tetraisoproxide and titanium tetrachloride.

34. The process of claim 31 wherein the liquid solution of (2) comprises a mixture of titanium tetrachloride and titanium tetraisopropoxide.

35. The process of claim 31 wherein the alkyl halide is butyl chloride.

36. The process of claim 31 wherein the liquid solution of (2) comprises a mixture of titanium tetrachloride and titanium tetraisopropoxide and the alkyl halide is butyl chloride.

37. The process of claim 31 wherein the trialkylaluminum is triethylaluminum or tri-n-octyl aluminum.

## Patentansprüche

1. Katalysatorvorläufer zur Herstellung von Katalysatoren für die Polymersisation von Olefinen, umfassend Magnesium und Titan,
wobei der Katalysatorvorläufer hergestellt wird durch Zugeben eines vorgefertigten Alkylmagnesiumhalogenids zu einer flüssigen Lösung, umfassend ein Lösungsmittel mit einem darin gelösten (a) Titanalkoxid oder einem Titanalkoxid und einem Titanhalogenid und (b) einem Alkylhalogenid,
wobei das Alkylmagnesiumhalogenid die Formel R¹MgZ hat, worin R¹ ein Alkylrest und Z ein Halogen ist und das Alkylhalogenid die Formel R²Z hat, worin R² ein Alkylrest und Z ein Halogen ist, und
die Zugabe des vorgefertigten Alkylmagnesiumhalogenids zu einer flüssigen Lösung über eine Zeitdauer von mindestens einer Stunde so gesteuert wird, daß geringe Mengen des vorgefertigten Alkylmagnesiumhalogenids mit dem Überschußtitan am Beginn der Umsetzung reagieren können.

2. Katalysatorvorläufer nach Anspruch 1, wobei das Titanhalogenid die allgemeine Formel TiZₙ hat, worin Z ein Halogenid und n 3 oder 4 ist, und das Titanalkoxid die allgemeine Formel Ti(OR¹)ₘ hat, worin R¹ ein Alkylrest und m 3 oder 4 ist.

3. Katalysatorvorläufer nach Anspruch 1, wobei (a) Titantetraisopropoxid oder Titantetraisopropoxid und Titantetrachlorid umfaßt.

4. Katalysatorvorläufer nach Anspruch 1, wobei (a) Titantetrachlorid und Titantetraisopropoxid umfaßt.

5. Katalysatorvorläufer nach Anspruch 1, wobei das Alkylhalogenid Butylchlorid ist.

6. Katalysatorvorläufer nach Anspruch 1, wobei (a) Titantetrachlorid und Titantetraisopropoxid umfaßt und (b) Butylchlorid ist.

7. Katalysatorvorläufer nach Anspruch 1, der Hohlteilchen aufweist.

8. Katalysatorvorläufer nach Anspruch 1, wobei das Alkylmagnesiumhalogenid der flüssigen Lösung in 1 bis 5 Stunden zugegeben wird.

9. Verfahren zur Herstellung eines Katalysatorvorläufers zur Herstellung von Katalysatoren für die Polymerisation von Olefinen, wobei das Verfahren die Zugabe eines vorgefertigten Alkylmagnesiumhalogenids zu einer flüssigen Lösung umfaßt, die ein Lösungsmittel mit einem darin gelösten (a) Titanalkoxid oder einem Titanalkoxid und einem Titanhalogenid, und (b) einem Alkylhalogenid umfaßt,
wobei das Alkylmagnesiumhalogenid die Formel R¹MgZ hat, worin R¹ ein Alkylrest und Z ein Halogen ist und das Alkylhalogenid die Formel R²Z hat, worin R² ein Alkylrest und Z ein Halogen ist, und die Zugabe des vorgefertigten Alkylmagnesiumhalogenids zur flüssigen Lösung über eine Zeitdauer von mindes-tens einer Stunde so gesteuert wird, daß geringe Mengen des vorgefertigten Alkylmagnesiumhalogenids mit dem Überschußtitan am Beginn der Umsetzung reagieren können.

10. Verfahren nach Anspruch 9, wobei das Titanoxid die allgemeine Formel TiZₙ hat, worin Z ein Halogenid und n 3 oder 4 ist, und das Titanalkoxid die allgemeine Formel Ti(OR¹)ₘ hat, worin R¹ ein Alkylrest und m 3 oder 4 ist.

11. Verfahren nach Anspruch 9, wobei (a) Titantetraisopropoxid oder Titantetraisopropoxid und Titantetrachlorid umfaßt.

12. Verfahren nach Anspruch 9, wobei (a) Titantetrachlorid und Titantetraisopropoxid umfaßt.

13. Verfahren nach Anspruch 9, wobei das Alkylhalogenid Butylchlorid ist.

14. Verfahren nach Anspruch 9, wobei (a) Titantetrachlorid und Titantetraisopropoxid umfaßt und (b) Butylchlorid ist.

15. Polymerisationskatalysator zur Polymerisation von Olefinen, der nach einem Verfahren hergestellt wird, bei dem eine Organoaluminiumverbindung zu einem Katalysatorvorläufer nach einem der Ansprüche 1 bis 8 zugegeben wird.

16. Katalysator nach Anspruch 15, wobei das Titanhalogenid die allgemeine Formel TiZₙ hat, worin Z ein Halogen und n 3 oder 4 ist, und das Titanalkoxid die allge-meine Formel Ti(OR¹)ₘ hat, worin R¹ ein Alkylrest und m 3 oder 4 ist.

17. Katalysator nach Anspruch 15, wobei (a) Titantetra-isopropoxid oder Titantetraisopropoxid und Titantetrachlorid umfaßt.

18. Katalysator nach Anspruch 15, wobei (a) Titantetrachlorid und Titantetraisopropoxid umfaßt.

19. Katalysator nach Anspruch 15, wobei das Alkylhalogenid Butylchlorid ist.

20. Katalysator nach Anspruch 15, wobei (a) Titantetrachlorid und Titantetraisopropoxid umfaßt und (b) Butylchlorid ist.

21. Katalysator nach Anspruch 15, wobei die Organoaluminiumverbindung eine Trialkylaluminiumverbindung ist.

22. Katalysator nach Anspruch 21, wobei die Trialkylaluminiumverbindung Triethylaluminium oder Tri-n-octylaluminium ist.

23. Vorpolymerisat zur Polymerisation von Olefinen, das nach dem Verfahren hergestellt wird, bei dem:
(1) der Katalysatorvorläufer nach einem der Ansprüche 1 bis 8 mit einem Aktivierungsmittel umgesetzt wird, das eine Organometallverbindung oder Verbindungen eines Metalls der Gruppe II oder III ist; und
(2) das Produkt aus Schritt (1) bei Olefin-Polymerisationsbedingungen mit einer ausreichenden Menge Olefin in Kontakt gebracht wird, so daß der Schmelzindex des erhaltenen Vorpolymerisats im Bereich von 1 bis 5 g/10 Min liegt.

24. Verfahren zur Polymerisation von Olefinen in Anwesenheit eines Polymerisatkatalysators, wobei das Verfahren die Verwendung eines Katalysators umfaßt, der aus einem Katalysatorvorläufer hergestellt wird, der das Produkt umfaßt, das man durch Zugeben eines vorgefertigten Alkylmagnesiumhalogenids zu einer flüssigen Lösung erhält, die ein Lösungsmittel mit einem darin gelösten (a) Titanalkoxid oder einem Titanalkoxid und einem Titanhalogenid, und (b) einem Alkylhalogenid umfaßt,
wobei das Alkylmagnesiumhalogenid die Formel R¹MgZ hat, worin R¹ ein Alkylrest und Z ein Halogen ist und das Alkylhalogenid die Formel R²Z hat, worin R² ein Alkylrest und Z ein Halogen ist, und
die Zugabe des vorgefertigten Alkylmagnesiumhalogenids zur flüssigen Lösung über eine Zeitdauer von mindestens einer Stunde so gesteuert wird, daß geringe Mengen des vorgefertigten Alkylmagnesiumhalogenids mit dem Überschußtitan am Beginn der Umsetzung reagieren können.

25. Verfahren nach Anspruch 24, wobei das Titanoxid die allgemeine Formel TiZₙ hat, worin Z ein Halogenid und n 3 oder 4 ist, und das Titanalkoxid die allgemeine Formel Ti(OR¹)ₘ hat, worin R¹ ein Alkylrest und m 3 oder 4 ist.

26. Verfahren nach Anspruch 24, wobei (a) Titantetraisopropoxid oder Titantetraisopropoxid und Titantetrachlorid umfaßt.

27. Verfahren nach Anspruch 24, wobei (a) Titantetrachlorid und Titantetraisopropoxid umfaßt.

28. Verfahren nach Anspruch 24, wobei das Alkylhalogenid Butylchlorid ist.

29. Verfahren nach Anspruch 24, wobei (a) Titantetrachlorid und Titantetraisopropoxid umfaßt und (b) Butylchlorid ist.

30. Verfahren nach Anspruch 24, wobei der Katalysatorvorläufer Hohlteilchen aufweist.

31. Verfahren zur Herstellung von Olefinen, umfassend:
(1) das Herstellen eines vorgefertigten Alkylmagnesiumhalogenids in einem Lösungsmittel;
(2) das Herstellen einer flüssigen Lösung, umfassend ein Lösungsmittel mit einem darin gelösten Titanalkoxid oder einem Titanalkoxid und einem Titanhalogenid, und einem Alkylhalogenid;
(3) das Zugeben des Produkts aus Schritt (1) zur flüssigen Lösung aus Schritt (2);
(4) das Zugeben von Trialkylaluminium zum Produkt aus Schritt (3);
(5) das Umsetzen des Produkts aus Schritt (4) bei Olefin-Polymerisationsbedingungen mit einer ausreichenden Menge Olefin, so daß der Schmelz-index des hergestellten Produkts im Bereich von 1 bis 5 g/10 Min liegt; und
(6) das Umsetzen des Produkts aus Schritt (5) bei Olefin-Polymerisationsbedingungen mit einer ausreichenden Menge Olefin, so daß das Polyolefinharz entsteht,
wobei das Alkylmagnesiumhalogenid die Formel R¹MgZ hat, worin R¹ ein Alkylrest und Z ein Halogen ist und das Alkylhalogenid die Formel R²Z hat, worin R² ein Alkylrest und Z ein Halogen ist, und
die Zugabe des vorgefertigten Alkylmagnesiumhalogenids zu einer flüssigen Lösung über eine Zeitdauer von mindestens einer Stunde so gesteuert wird, daß geringe Mengen des vorgefertigten Alkylmagnesiumhalogenids mit dem Überschußtitan am Beginn der Umsetzung reagieren können.

32. Verfahren nach Anspruch 31, wobei das Titanhalogenid die allgemeine Formel TiZₙ hat, worin Z ein Halogenid und n 3 oder 4 ist, und das Titanalkoxid die allgemeine Formel Ti(OR¹)ₘ hat, worin R¹ ein Alkylrest und m 3 oder 4 ist.

33. Verfahren nach Anspruch 31, wobei (a) Titantetraisopropoxid oder Titantetraisopropoxid und Titantetrachlorid umfaßt.

34. Verfahren nach Anspruch 31, wobei die flüssige Lösung aus (2) ein Gemisch aus Titantetrachlorid und Titantetraisopropoxid umfaßt.

35. Verfahren nach Anspruch 31, wobei das Alkylhalogenid Butylchlorid ist.

36. Verfahren nach Anspruch 31, wobei die flüssige Lösung aus (2) ein Gemisch aus Titantetrachlorid und Titantetraisopropoxid umfaßt und das Alkylhalogenid Butylchlorid ist.

37. Verfahren nach Anspruch 31, wobei das Trialkylaluminium Triethylaluminium oder Tri-n-octylaluminium ist.

## Revendications

1. Précurseur de catalyseur, utile pour la préparation de catalyseurs utiles dans la polymérisation d'oléfines, qui comprend du magnésium et du titane,
ledit précurseur de catalyseur étant préparé en ajoutant un halogénure d'alkylmagnésium préformé à une solution liquide comprenant un solvant renfermant à l'état dissous (a) un alcoolate de titane ou à la fois un alcoolate de titane et un halogénure de titane ; et (b) un halogénure d'alkyle,
l'halogénure d'alkylmagnésium étant défini par la formule R¹MgZ dans laquelle R¹ représente un radical alkyle et Z représente un halogénure, et l'halogénure d'alkyle étant défini par la formule R²Z dans laquelle R² représente un radical alkyle et Z représente un halogénure,
et l'addition de l'halogénure d'alkylmagnésium préformé à la solution liquide étant ajustée pendant un temps d'au moins une heure de manière à permettre à de faibles concentrations de l'halogénure d'alkylmagnésium préformé de réagir avec le titane en excès au début de la réaction.

2. Précurseur de catalyseur suivant la revendication 1, dans lequel l'halogénure de titane répond à la formule TiZₙ dans laquelle Z représente un halogénure et n est égal à 3 ou 4, et l'alcoolate de titane répond à la formule générale Ti(OR¹)ₘ dans laquelle R¹ représente un radical alkyle et m est égal à 3 ou 4.

3. Précurseur de catalyseur suivant la revendication 1, dans lequel le constituant (a) comprend le tétra-isopropylate de titane ou à la fois du tétra-isopropylate de titane et du tétrachlorure de titane.

4. Précurseur de catalyseur suivant la revendication 1, dans lequel le constituant (a) comprend à la fois du tétrachlorure de titane et du tétra-isopropylate de titane.

5. Précurseur de catalyseur suivant la revendication 1, dans lequel l'halogénure d'alkyle est le chlorure de butyle.

6. Précurseur de catalyseur suivant la revendication 1, dans lequel le constituant (a) comprend à la fois du tétrachlorure de titane et du tétra-isopropylate de titane et le constituant (b) consiste en chlorure de butyle.

7. Précurseur de catalyseur suivant la revendication 1, qui comprend des particules creuses.

8. Précurseur de catalyseur suivant la revendication 1, dans lequel l'halogénure d'alkylmagnésium est ajouté à la solution liquide en un temps de 1 à 5 heures.

9. Procédé pour la préparation d'un précurseur de catalyseur, utile pour préparer des catalyseurs utiles dans la polymérisation d'oléfines, ledit procédé comprenant l'addition d'un halogénure d'alkylmagnésium préformé à une solution liquide comprenant un solvant renfermant à l'état dissous (a) un alcoolate de titane ou bien à la fois un alcoolate de titane et un halogénure de titane ; et (b) un halogénure d'alkyle,
dans lequel l'halogénure d'alkylmagnésium est défini par la formule R¹MgZ dans laquelle R¹ représente un radical alkyle et Z représente un halogénure, et l'halogénure d'alkyle est défini par la formule R²Z dans laquelle R² représente un radical alkyle et Z représente un halogénure,
et dans lequel l'addition de l'halogénure d'alkylmagnésium préformé à la solution liquide est ajustée pendant un temps d'au moins une heure de manière à permettre à de faibles concentrations de l'halogénure d'alkylmagnésium préformé de réagir avec le titane en excès au début de la réaction.

10. Procédé suivant la revendication 9, dans lequel l'halogénure de titane répond à la formule TiZₙ dans laquelle Z représente un halogénure et n est égal à 3 ou 4, et l'alcoolate de titane répond à la formule générale Ti(OR¹)ₘ dans laquelle R¹ représente un radical alkyle et m est égal à 3 ou 4.

11. Procédé suivant la revendication 9, dans lequel le constituant (a) comprend du tétra-isopropylate de titane ou à la fois du tétra-isopropylate de titane et du tétrachlorure de titane.

12. Procédé suivant la revendication 9, dans lequel le constituant (a) comprend à la fois du tétrachlorure de titane et du tétra-isopropylate de titane.

13. Procédé suivant la revendication 9, dans lequel l'halogénure d'alkyle est le chlorure de butyle.

14. Procédé suivant la revendication 9, dans lequel le constituant (a) comprend à la fois du tétrachlorure de titane et du tétra-isopropylate de titane et le constituant (b) consiste en chlorure de butyle.

15. Catalyseur de polymérisation, utile pour la polymérisation d'oléfines, préparé par un procédé comprenant l'addition d'un composé organique d'aluminium au précurseur de catalyseur suivant l'une quelconque des revendications 1 à 8.

16. Catalyseur suivant la revendication 15, dans lequel l'halogénure de titane répond à la formule générale TiZₙ dans laquelle Z représente un halogénure et n est égal à 3 ou 4, et l'alcoolate de titane répond à la formule générale Ti(OR¹)ₘ dans laquelle R¹ représente un radical alkyle et m est égal à 3 ou 4.

17. Catalyseur suivant la revendication 15, dans lequel le constituant (a) comprend du tétra-isopropylate de titane ou bien à la fois du tétra-isopropylate de titane et du tétrachlorure de titane.

18. Catalyseur suivant la revendication 15, dans lequel le constituant (a) comprend à la fois du tétrachlorure de titane et du tétra-isopropylate de titane.

19. Catalyseur suivant la revendication 15, dans lequel l'halogénure d'alkyle est le chlorure de butyle.

20. Catalyseur suivant la revendication 15, dans lequel le constituant (a) comprend à la fois du tétrachlorure de titane et du tétra-isopropylate de titane et le constituant (b) consiste en chlorure de butyle.

21. Catalyseur suivant la revendication 15, dans lequel le composé organique d'aluminium est un composé de trialkylaluminium.

22. Catalyseur suivant la revendication 21, dans lequel le composé de trialkylaluminium est le triéthylaluminium ou le tri-n-octylaluminium.

23. Prépolymère, utile pour la polymérisation d'oléfines, obtenu par le procédé comprenant les étapes consistant :
(1) à faire réagir le précurseur de catalyseur suivant l'une quelconque des revendications 1 à 8 avec un activateur qui consiste en un ou plusieurs composés organométalliques d'un métal du Groupe II ou III ; et
(2) à mettre en contact le produit de l'étape (1) avec une quantité d'oléfine, dans des conditions de polymérisation d'oléfines, suffisante pour que le prépolymère obtenu ait un indice de fluidité compris dans l'intervalle de 1 à 5 g/10 min.

24. Procédé pour la polymérisation d'oléfines en présence d'un catalyseur de polymérisation, procédé qui comprend l'utilisation d'un catalyseur préparé à partir d'un précurseur de catalyseur comprenant le produit obtenu en ajoutant un halogénure d'alkylmagnésium préformé à une solution liquide comprenant un solvant renfermant à l'état dissous (a) un alcoolate de titane ou bien à la fois un alcoolate de titane et un halogénure de titane ; et (b) un halogénure d'alkyle,
dans lequel l'halogénure d'alkylmagnésium est défini par la formule R¹MgZ dans laquelle R¹ représente un radical alkyle et Z représente un halogénure et l'halogénure d'alkyle est défini par la formule R²Z dans laquelle R² représente un radical alkyle et Z représente un halogénure,
et dans lequel l'addition de l'halogénure d'alkylmagnésium préformé à la solution liquide est ajustée pendant un temps d'au moins une heure de manière à permettre à de faibles concentrations de l'halogénure d'alkylmagnésium préformé de réagir avec le titane en excès au début de la réaction.

25. Procédé suivant la revendication 24, dans lequel l'halogénure de titane répond à la formule TiZₙ dans laquelle Z représente un halogénure et n est égal à 3 ou 4, et l'alcoolate de titane répond à la formule générale Ti(OR¹)ₘ dans laquelle R¹ représente un radical alkyle et m est égal à 3 ou 4.

26. Procédé suivant la revendication 24, dans lequel le constituant (a) comprend le tétra-isopropylate de titane ou à la fois du tétra-isopropylate de titane et du tétrachlorure de titane.

27. Procédé suivant la revendication 24, dans lequel le constituant (a) comprend à la fois du tétrachlorure de titane et du tétra-isopropylate de titane.

28. Procédé suivant la revendication 24, dans lequel l'halogénure d'alkyle est le chlorure de butyle.

29. Procédé suivant la revendication 24, dans lequel le constituant (a) comprend à la fois du tétrachlorure de titane et du tétra-isopropylate de titane et le constituant (b) consiste en chlorure de butyle.

30. Procédé suivant la revendication 24, dans lequel le précurseur de catalyseur comprend des particules creuses.

31. Procédé pour la polymérisation d'oléfines, comprenant les étapes consistant :
(1) à préparer un halogénure d'alkylmagnésium préformé dans un solvant ;
(2) à préparer une solution liquide comprenant un solvant renfermant à l'état dissous un alcoolate de titane ou bien à la fois un alcoolate de titane et un halogénure de titane, et un halogénure d'alkyle,
(3) à ajouter le produit de l'étape (1) à la solution liquide de l'étape (2) ;
(4) à ajouter un trialkylaluminium au produit de l'étape (3) ;
(5) à faire réagir le produit de l'étape (4) avec une quantité d'oléfine, dans des conditions de polymérisation d'oléfines, suffisante pour que le produit formé ait un indice de fluidité compris dans l'intervalle de 1 à 5 g/10 min ;
(6) à faire réagir le produit de l'étape (5) avec une quantité d'oléfine, dans des conditions de polymérisation d'oléfines, suffisante pour produire une résine polyoléfinique,
dans lequel l'halogénure d'alkylmagnésium est défini par la formule R¹MgZ dans laquelle R¹ représente un radical alkyle et Z représente un halogénure et l'halogénure d'alkyle est défini par la formule R²Z dans laquelle R² représente un radical alkyle et Z représente un halogénure,
et dans lequel l'addition de l'halogénure d'alkylmagnésium préformé à la solution liquide est ajustée en un temps d'au moins une heure de manière à permettre à de faibles concentrations de l'halogénure d'alkylmagnésium préformé de réagir avec le titane en excès au début de la réaction.

32. Procédé suivant la revendication 31, dans lequel l'halogénure de titane répond à la formule générale TiZₙ dans laquelle Z représente un halogénure et n est égal à 3 ou 4, et l'alcoolate de titane répond à la formule générale Ti(OR¹)ₘ dans laquelle R¹ représente un radical alkyle et m est égal à 3 ou 4.

33. Procédé suivant la revendication 31, dans lequel le constituant (a) comprend le tétra-isopropylate de titane ou à la fois du tétra-isopropylate de titane et du tétrachlorure de titane.

34. Procédé suivant la revendication 31, dans lequel la solution liquide de (2) comprend un mélange de tétrachlorure de titane et de tétra-isopropylate de titane.

35. Procédé suivant la revendication 31, dans lequel l'halogénure d'alkyle est le chlorure de butyle.

36. Procédé suivant la revendication 31, dans lequel la solution liquide de (2) comprend un mélange de tétrachlorure de titane et de tétra-isopropylate de titane et l'halogénure d'alkyle consiste en chlorure de butyle.

37. Procédé suivant la revendication 31, dans lequel le trialkylaluminium consiste en triéthylaluminium ou tri-n-octylaluminium.
